# EUROPEAN PATENT SPECIFICATION

(11) **EP 3 018 750 B1**
(45) Date of publication and mention of the grant of the patent: **19.12.2018**
(21) Application number: 14820629.5
(22) Date of filing: 27.06.2014
(51) Int. Cl.: H01M 2/02, H01M 2/18, H01M 2/30, H01M 2/16, H01M 2/26, H01M 10/04, H01M 10/0525

(54) **BATTERY CELL**
BATTERIEZELLE
CELLULE DE BATTERIE

(30) Priority: 05.07.2013 JP 2013141799
(43) Date of publication of application: 11.05.2016
(73) Proprietor: NEC Energy Devices, Ltd., Chuo-ku Sagamihara-shi Kanagawa 252-5298 (JP)
(72) Inventor: SHIRAISHI, Shoichiro, Sagamihara-shi Kanagawa 252-5298 (JP)
(74) Representative: Vossius & Partner Patentanwälte Rechtsanwälte mbB
(86) International application number: PCT/JP2014/067204
(87) International publication number: WO 2015/002094

(56) References cited:
- JP-A- H04 167 371
- JP-A- 2010 080 324
- JP-A- 2012 033 399
- JP-A- 2012 113 843
- JP-A- 2012 113 843
- JP-A- 2012 142 144
- JP-A- 2012 520 551
- JP-A- 2014 007 103
- US-A1- 2012 148 901

## Description

### Technical Field

The present invention relates to a battery cell that is used in a secondary battery such as a lithium-ion battery.

### Background Art

Along with the recent development and popularization of electronic apparatuses, in particular, portable information apparatuses such as mobile phones, notebook type personal computers, and video cameras, there has been a significant increase in demand for small and lightweight secondary batteries that have high energy density. Therefore, studies have been made to improve the technical characteristics of secondary batteries in order to realize higher performance.

In the main configuration of the secondary battery, a battery pack includes therein an assembled battery including laminated battery cells. In each of the battery cells, a battery assembly having positive electrode and negative electrode alternately laminated with separators sandwiched therebetween is packaged together with electrolyte solution in an outer case made of laminate film or the like. In the secondary battery with such a configuration, when a voltage which is equal to or greater than a rated voltage is applied, the temperature in the battery cell becomes high due to overcharging of the secondary battery or the like. When the battery cell temperature reaches the melting point of the separator, tears developed in parts of the separator, a short-circuit occurs between the positive electrode and the negative electrode, followed by decomposition and evaporation of the electrolyte solution, and gas is thus generated in the battery cell, in some cases.

Hence, Patent Document 1 discloses a battery cell (film case battery) in which gas, that is generated from the battery assembly, does not accumulate within the battery assembly, and that includes a buffer part that collects gas in a region other than the battery assembly, at an upper part in the vertical direction. Further, Patent Document 2 discloses a battery cell (secondary battery) in which gas, that is generated from the battery assembly (electrode assembly), does not accumulate within the battery assembly, and that includes a residue part that collects gas in a region other than the battery assembly, at a lateral side of the battery assembly. The lamination state of the battery assembly in which the positive electrode, the negative electrode, and the separator are laminated, is maintained by allowing the generated gas to escape from the battery assembly and by accumulating the gas in the buffer part or the residue part within the battery cell.
JP2012113843 A refers to a battery unit comprising a plurality of batteries each having both main surfaces; and a combination member which is provided between the batteries and combines the batteries so that the main surfaces of the batteries face each other. US2012148901 A1 refers to a laminated microporous film including a base which is formed from a non-woven fabric, and a surface layer which is formed on at least one of the surfaces of the base and includes a resin material and inorganic particles, wherein variation in thickness which is expressed using a standard deviation is equal to or less than 2.5%. JPH04167371 A refers to a traverser being moved leftward and a negative electrode plate located on a lifter being held by the clamp of the traverser. Then, the traverser is moved rightward and separators are then expanded on a dummy plate and the plate is put on the separators. JP2010080324 A refers to a device where the electrode stack has a substantially rectangular parallelopiped laminated with the plurality of electrodes formed by applying the active material layer on both sides or one face of the collector, via the separator, and at least three sides of the electrode stack are fixed along a lamination direction from an upper face to an under face, by a fixing member. JP2012142144 A refers to a film exterior battery having a battery element with a plurality of electrode plates laminated via a separator; an exterior film tightly sealing the battery element, and a cover film adhered on a recess existing in predetermined areas set on a surface of the exterior film. JP2012033399 A refers to a rectangular lithium ion battery comprising a laminated electrode body in which rectangular positive electrode plate and a rectangular negative electrode plate are laminated on each other via a separator.

### Prior Art Document List

Patent Document 1: JP2004-265762A
Patent Document 2: JP2009-545849A

However, even when the gas is continuously accumulated in the buffer part or residue part for allowing the gas to escape from the battery assembly as shown in the inventions disclosed in Patent Document 1 and Patent Document 2, the short-circuit that is occurring in the battery assembly is not stopped, and therefore, gas is continuously generated from the battery assembly. As a result, the volume of the continuously generated gas exceeds the capacity of the buffer part or the residue part, and the pressure in the battery cell increases drastically. Then, there is a risk that the battery cell may burst and break once the pressure in the battery cell exceeds a predetermined pressure. Alternatively, there is a risk that a part of the battery cell may break and the gas may leak from the broken part to the outside.

Hence, an object of the present invention is to solve the above problem, and to provide a battery cell in which the pressure in the battery cell does not increase to a pressure likely to cause a rupture, and heat generation at the time of the short-circuit and the generation of the gas can be reduced, even if a short-circuit occurs between the electrodes in the battery cell.

### Means to Solve the Problems

For achieving the above object, a battery cell in the present invention includes: a battery assembly that is contained within a flexible outer case and in which a positive electrode and a negative electrode are alternately laminated so as to sandwich a separator therebetween; an electrolyte solution that is contained within the outer case; a positive electrode terminal that has one end electrically connected with the positive electrode and that has the other end extend to outside of the outer case; a negative electrode terminal that has one end electrically connected with the negative electrode and that has the other end extend to outside of the outer case; and fixation members that are respectively provided on a pair of opposite lateral surfaces of the battery assembly as viewed from above in a laminating direction of the positive electrode and the negative electrode, wherein each of the fixation member fixes the electrodes and the separators together, said separators, which overlap each other so as to sandwich said positive electrode there between, have respective edge parts which are partially joined to each other and have a bag shape allowing said positive electrode to be contained therein, and wherein said separators are formed such that a thermal shrinkage ratio in a direction parallel to a direction in which said positive electrode terminal and said negative electrode terminal extend, is lower than a thermal shrinkage ratio in a direction perpendicular to the direction in which said positive electrode terminal and said negative electrode terminal extend.

### Effects of the Invention

According to the present invention, the short-circuit current, at the time of the internal short-circuit, decreases, generation of the gas in the battery cell is reduced by reducing heat generation, which makes it difficult for battery cell pressure to increase.

### Brief Description of Drawings

[Figure 1] A plan view showing a battery cell in an exemplary embodiment of the present invention.
[Figure 2] A perspective view showing a battery assembly including fixation members and terminals in the exemplary embodiment shown in Figure 1.
[Figure 3a] A plan view showing a positive electrode in the exemplary embodiment shown in Figure 1.
[Figure 3b] A plan view showing a negative electrode in the exemplary embodiment shown in Figure 1.
[Figure 4] A plan view showing the configuration of a bag-shaped separator in the exemplary embodiment shown in Figure 1.
[Figure 5] A plan view showing a state in which positive electrodes, which is inserted between separators, and negative electrodes are laminated in the exemplary embodiment shown in Figure 1.
[Figure 6] A perspective view showing a battery assembly in the exemplary embodiment shown in Figure 1.
[Figure 7] A perspective view showing a state in which the battery assembly is fixed by the fixation members in the exemplary embodiment shown in Figure 1.
[Figure 8a] A perspective view showing various shapes of an outer case in the exemplary embodiment shown in Figure 1.
[Figure 8b] A perspective view showing various shapes of an outer case in the exemplary embodiment shown in Figure 1.
[Figure 9] A perspective view showing a state in which the battery assembly is contained in the outer case in the exemplary embodiment shown in Figure 1.

### Exemplary Embodiment

Hereinafter, an exemplary embodiment of the present invention will be described with reference to the drawings.

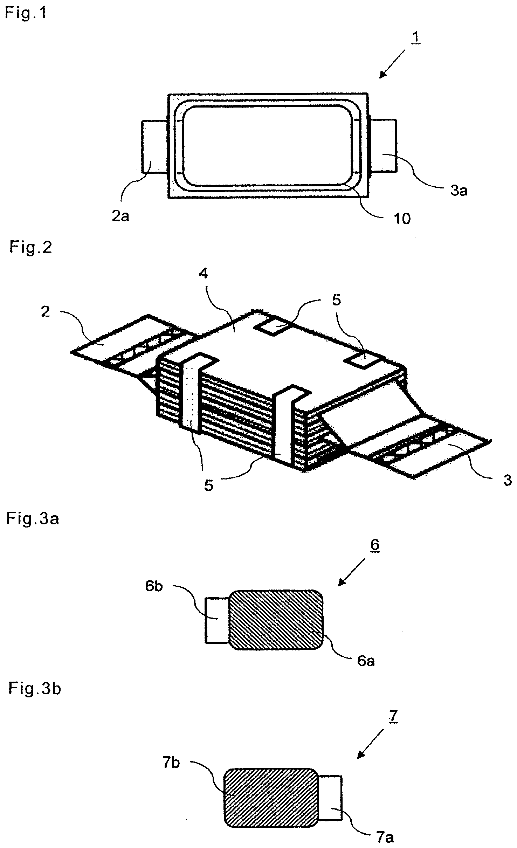

Figure 1 is a perspective view showing a battery cell in an exemplary embodiment of the present invention.

Battery cell 1 is comprised of battery assembly 4 (see Figure 2), from which positive electrode terminal 2 and negative electrode terminal 3 extend, and flexible outer case 10 of a laminate film and the like which contains battery assembly 4 in the interior. Parts of positive electrode terminal 2 and negative electrode terminal 3 that are exposed to the exterior of outer case 10 of battery cell 1 form positive electrode terminal exposed part 2a and negative electrode terminal exposed part 3a, respectively. As shown in Figure 2, Figure 5, and Figure 6, battery assembly 4 is formed by laminating positive electrodes 6 contained in bag-shaped insulating separators 8 and negative electrodes 7. Positive electrode terminal 2 and negative electrode terminal 3 each extend from opposite lateral surfaces of battery assembly 4.

Separator 8, in which the respective edge parts of sheet-shaped separator members that overlap each other so as to sandwich positive electrode 6 therebetween are partially joined to each other, has a bag shape to contain positive electrode body part 6a (see Figure 3a). Furthermore, separator 8 is configured such that the thermal shrinkage ratio in the direction parallel to a direction in which positive electrode current collection tab 6b or positive electrode terminal 2 extends, is lower than the thermal shrinkage ratio in the direction perpendicular to the direction in which positive electrode current collection tab 6b or positive electrode terminal 2 extends.

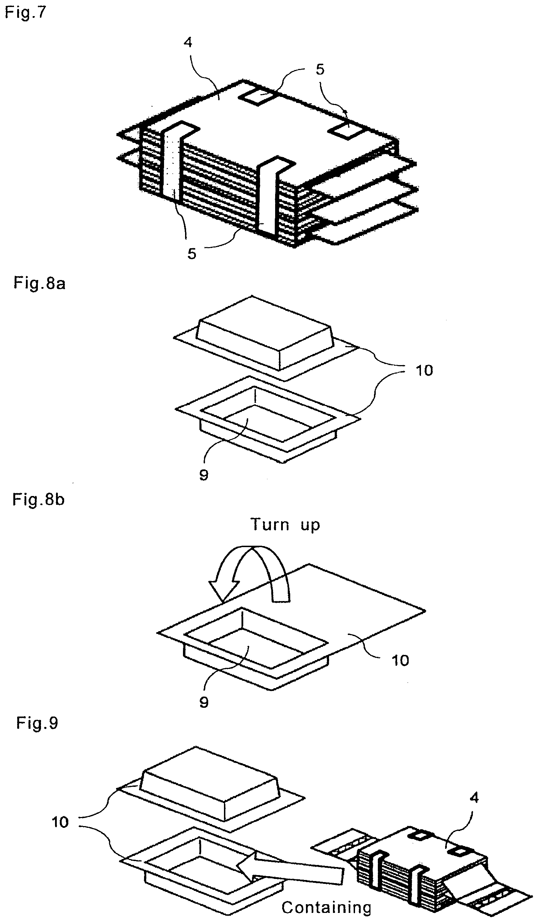

Battery assembly containing part 9 (see Figures 8a and 8b) of outer case 10 containing battery assembly 4 is configured such that its volume is larger than the volume of battery assembly 4 by 10% or more, in order to prevent outer case 10 from impeding expansion of battery assembly 4 when gas is generated and penetrates the electrodes of battery assembly 4. Positive electrode terminal 2 and negative electrode terminal 3 are configured such that their widths are smaller than the widths of battery assembly 4 from which they extend, in a planar view, in order not to obstruct the expansion of battery assembly 4.

Further, as shown in Figure 2, fixation members 5 such as tape for fixing laminated positive electrodes 6 contained in separators 8 and negative electrodes 7 such that they are not displaced, are provided on a pair of opposite lateral surfaces of battery assembly 4, as viewed from above in the laminating direction of the electrodes. Fixation members 5 are provided such that the pair of opposite lateral surfaces of battery assembly 4 on which fixation members 5 are provided are different from the lateral surfaces from which positive electrode terminal 2 and negative electrode terminal 3 extend. Further, fixation members 5 provided on the lateral surfaces are provided at regions that respectively spread from a pair of sides that extend in the laminating direction of the electrodes toward the centers of the lateral surfaces. Each of the surface areas occupied by the regions is 25% or less of the total surface area of the lateral surface.

Since fixation member 5 is provided in this way, when a short-circuit occurs between positive electrode 6 and negative electrode 7, electrolyte solution evaporates, and gas is generated, battery assembly 4 expands easily. Particularly, a part that is not held by fixation member 5 expands easily. That is, the center of battery cell 1 that corresponds to the center of battery assembly 4 expands easily. Further, the thermal shrinkage ratio of separator 8 in the direction perpendicular to the direction in which positive electrode terminal 2 and negative electrode terminal 3 extend is higher, and separator 8 easily shrinks in that direction. Therefore, battery assembly 4 and battery cell 1 easily expand in an arch shape, as viewed from the direction in which the terminals extend. Furthermore, the widths of positive electrode terminal 2 and negative electrode terminal 3 are smaller than the widths of battery assembly 4 from which they extend, in a planar view, and therefore, the expansion of battery cell 1 is not easily prevented from occurring.

In the state in which battery cell 1 has expanded, the gas penetrates between positive electrode 6 and negative electrode 7 in battery cell 1, and the space between positive electrode 6 and negative electrode 7 becomes larger. Since the space between positive electrode 6 and negative electrode 7 becomes larger, electric resistance between positive electrode 6 and negative electrode 7 increases, and short-circuit current between both electrodes decreases. Gas generation in battery cell 1 is reduced from the time when short-circuit current between both electrodes decreases, and therefore, the generated gas does not exceed the volume of battery cell 1. Therefore, it is unlikely that battery cell 1 will expand excessively and then will rupture due to a drastic increase in the pressure within battery cell 1. At the same time, the generation of the thermal energy due to the short-circuit is reduced from the time when the short-circuit current between both electrodes decreases, and therefore, it is possible to stop the temperature of battery cell 1 from rising.

The steps of producing battery cell 1 according to the above configuration will be described.

First, as shown in Figure 3a, positive electrode 6 composed of aluminum and including positive electrode body part 6a, on which positive electrode active material is applied on both surfaces, and positive electrode current collection tab 6b, on which the positive electrode active material is not applied, is prepared. Next, as shown in Figure 3b, negative electrode 7 composed of copper and including negative electrode body part 7a, on which a negative electrode active material is applied on both surfaces, and negative electrode current collection tab 7b, on which the negative electrode active material is not applied, is prepared.

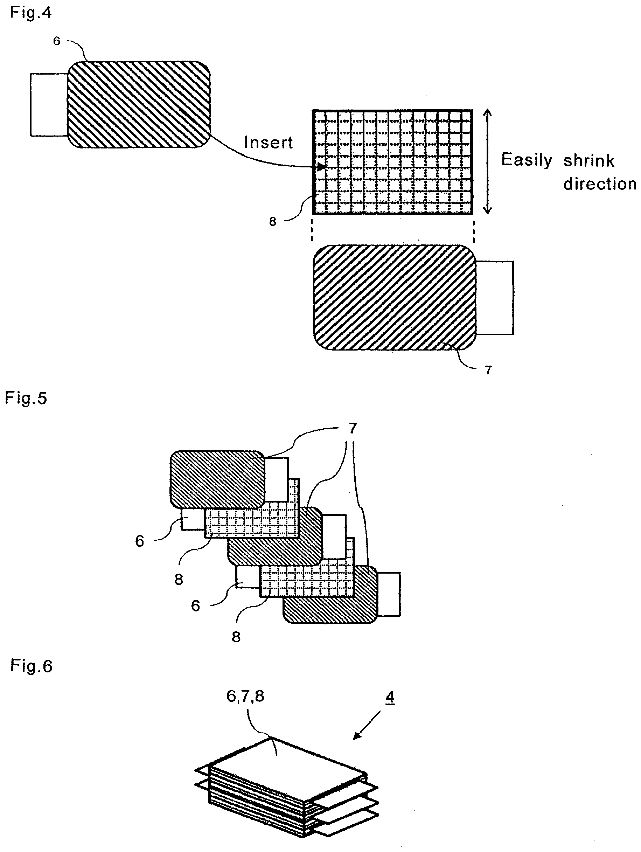

Subsequently, as shown in Figure 4, two sheet-shaped separator members composed of an insulating material such as polyolefin are prepared. Then, three sides of the two separator members are thermally welded to each other to form bag-shaped separator 8 that is to contain positive electrode body part 6a of positive electrode 6 such that positive electrode current collection tab 6b of positive electrode 6 to be contained is exposed to the exterior and such that positive electrode body part 6a can be contained in the interior. At this time, bag-shaped separator 8 is configured such that the thermal shrinkage ratio in the direction parallel to the direction in which positive electrode current collection tab 6b or positive electrode terminal 2 extends, is lower than the thermal shrinkage ratio in the direction perpendicular to the direction in which positive electrode current collection tab 6b or positive electrode terminal 2 extends. Here, it is preferable that the dimensions of bag-shaped separator 8 be nearly equal to the dimensions of negative electrode body part 7a of negative electrode 7, in order to prevent displacement when the positive and negative electrodes are laminated.

Then, as shown in Figure 5, positive electrodes 6 contained in bag-shaped separator 8 and negative electrodes 7 are alternately laminated, and as shown in Figure 6, flat battery assembly 4 is formed. At this time, positive electrode 6 and negative electrode 7 are laminated such that positive electrode current collection tab 6b of positive electrode 6 and negative electrode current collection tab 7b of negative electrode 7 extend from the opposite lateral surfaces of battery assembly 4 respectively. Further, as shown in Figure 7, fixation members 5 for fixing laminated positive electrodes 6 and negative electrodes 7 such that they are not displaced, are provided on the pair of lateral surfaces of battery assembly 4 from which positive electrode current collection tab 6b and negative electrode current collection tab 7b do not extend. As described above, fixation members 5 are provided at the regions that are on the lateral surfaces of battery assembly 4 and that respectively spread from the pair of sides extending in the laminating direction of positive electrodes 6 and negative electrodes 7 toward the centers of the lateral surfaces of battery assembly 4. Each of the surface areas of the regions is set so as to be equal to or less than 25% of the total surface area of the lateral surface of battery assembly 4. That is, fixation member 5 is not disposed at a region of 50% of the surface area of the lateral surface around the center line of the lateral surface of battery assembly 4 that extends in the laminating direction of the electrodes. Here, as fixation member 5, a tape or the like is used.

As shown in Figure 2, positive electrode current collection tabs 6b that extend from the lateral surface of battery assembly 4 are laminated to each other, and laminated positive electrode current collection tabs 6b are connected with one end of positive electrode terminal 2. Similarly, negative electrode current collection tabs 7b are laminated to each other, and are connected with one end of negative electrode terminal 3. The connection between the current collection tabs and the terminals may be performed secondarily through conductive members. In this case, a resin may be formed in a part of positive electrode terminal 2 and negative electrode terminal 3, or alternatively in a part of the conductive members.

Produced battery assembly 4 is contained in flexible outer case 10 which is composed of aluminum or the like and in which the front surface and the back surface are coated with a resin. Outer case 10 is formed in a shape comprising battery assembly containing part 9 for containing battery assembly 4 which is formed by press working as shown in Figure 8a and Figure 8b, or the like, or in a can shape comprising the battery assembly containing part in the interior which is formed by drawing of an aluminum plate, or the like. Battery assembly containing part 9 is configured such that its volume is larger than the volume of battery assembly 4 by 10% or more. As shown in Figure 9, battery assembly 4 is disposed in the battery assembly containing part of outer case 10, such that the other end of positive electrode terminal 2 and the other end of negative electrode terminal 3 are exposed to exterior outer case 10. At this time, the other end of positive electrode terminal 2 and the other end of negative electrode terminal 3 that are exposed to exterior of outer case 10 form positive electrode terminal exposed part 2a and negative electrode terminal exposed part 3a.

Then, while a part is left as an opening part for injecting the electrolyte solution, the periphery of outer case 10 which contains battery assembly 4 is sealed by thermal welding, except for the opening part. Thereafter, the electrolyte solution is injected from the opening part into the interior of outer case 10, and the opening part is bonded, so that battery cell 1 shown in Figure 1 is formed.

Battery cell 1 is completed by such steps.

As described above, fixation members 5 retain only the lateral surfaces from which the terminals of battery assembly 4 of battery cell 1 do not extend. Thereby, when gas is generated due to a short-circuit between both electrodes, the center of battery cell 1 that corresponds to the center of battery assembly 4 expands easily. Further, the thermal shrinkage ratio of separator 8 in the direction perpendicular to the direction in which the terminals extend is higher, and separator 8 easily shrinks in that direction.

Therefore, battery assembly 4 and battery cell 1 easily expand in an arch shape, as viewed from the direction in which the terminals extend. Furthermore, the widths of positive electrode terminal 2 and negative electrode terminal 3 are smaller than the widths of battery assembly 4 from which they extend, in a planar view, and therefore, the expansion of battery cell 1 is not easily impeded.

In the state in which battery cell 1 has expanded in this way, the gas penetrates between positive electrode 6 and negative electrode 7, and the space becomes larger. Therefore, electric resistance between positive electrode 6 and negative electrode 7 increases, and short-circuit current between both electrodes decreases. Gas generation in battery assembly 4 within battery cell 1 is reduced from the time when the short-circuit current between both electrodes decreases. At the same time, thermal energy generation due to the short circuit is stopped, and an increase in the temperature of battery cell 1 can be prevented.

Thus, the specific configuration of the present invention has been described based on one exemplary embodiment, but the present invention is not limited to the above-described exemplary embodiment. Needless to say, various modifications of the above-described exemplary embodiment can be made without departing from the scope of the present invention as defined by the appended claims.

The present application claims the priority based on Japanese Patent Application No. 2013-141799 filed on July 5, 2013.

## Claims

1. A battery cell comprising:
a battery assembly that is contained within a flexible outer case and in which positive electrodes and negative electrodes are alternately laminated
so as to sandwich a separator there between;
an electrolyte solution that is contained within said outer case;
a positive electrode terminal that has one end electrically connected with said positive electrode and that has the other end which extends to outside of said outer case;
a negative electrode terminal that has one end electrically connected with said negative electrode and that has the other end which extends to outside of said outer case; and
fixation members that are respectively provided on a pair of opposite lateral surfaces of said battery assembly as viewed from above in a laminating direction of said positive electrode and said negative electrode, wherein
each of the fixation member fixes the electrodes and the separators together, said separators, which overlap each other so as to sandwich said positive electrode there between, have respective edge parts which are partially joined to each other and have a bag shape allowing said positive electrode to be contained therein, **characterised in that** said separators are formed such that a thermal shrinkage ratio in a direction parallel to a direction in which said positive electrode terminal and said negative electrode terminal extend, is lower than a thermal shrinkage ratio in a direction perpendicular to the direction in which said positive electrode terminal and said negative electrode terminal extend.

2. The battery cell according to claim 1,
wherein widths of said positive electrode terminal and said negative electrode terminal are smaller than widths of sides of said battery assembly from which said positive electrode terminal and said negative electrode terminal extend, as viewed from above in the laminating direction.

3. The battery cell according claim 1 or 2,
wherein said positive electrode terminal and said negative electrode terminal extend from opposite lateral surfaces of said battery assembly.

4. The battery cell according to any one of claims 1 to 3,
wherein the pair of lateral surfaces of said battery assembly on which said fixation members are provided are different from the lateral surfaces from which said positive electrode terminal and said negative electrode terminal extend.

5. The battery cell according to any one of claims 1 to 4,
wherein the fixation members provided on the pair of opposite lateral surfaces of said battery assembly are provided at regions respectively spreading from a pair of sides of the lateral surfaces toward centers of the lateral surfaces, and each surface area of the regions is 25% or less of a total surface area of the lateral surface, the pair of sides of the lateral surfaces extending in the laminating direction.

6. The battery cell according to any one of claims 1 to 5,
wherein a volume of a battery assembly containing part of said outer case that contains said battery assembly is larger than a volume of said battery assembly by 10% or more.

## Patentansprüche

1. Batteriezelle, mit:
einer Batterieanordnung, die in einem flexiblen Außengehäuse aufgenommen ist und in der positive Elektroden und negative Elektroden alternierend derart laminiert sind, dass sie einen dazwischen angeordneten Separator sandwichartig umschließen;
einer im Außengehäuse aufgenommenen Elektrolytlösung;
einem positiven Elektrodenanschluss, dessen eines Ende mit der positiven Elektrode elektrisch verbunden ist und dessen anderes Ende sich zur Außenseite des Außengehäuses erstreckt;
einem negativen Elektrodenanschluss, dessen eines Ende mit der negativen Elektrode elektrisch verbunden ist und dessen anderes Ende sich zur Außenseite des Außengehäuses erstreckt; und
Befestigungselementen, die von oben betrachtet in einer Laminierungsrichtung der positiven Elektrode und der negativen Elektrode jeweils an einem Paar gegenüberliegender lateraler Flächen der Batterieanordnung angeordnet sind,
wobei jedes der Befestigungselemente die Elektroden und die Separatoren zusammen fixiert, wobei die Separatoren, die sich einander überlappen, so dass sie die dazwischen angeordnete positive Elektrode sandwichartig umschließen, jeweilige Randabschnitte aufweisen, die teilweise miteinander verbunden sind und eine Taschenform haben, die es ermöglicht, die positive Elektrode darin aufzunehmen;
**dadurch gekennzeichnet, dass**
die Separatoren derart ausgebildet sind, dass ihre thermische Schrumpfung in einer Richtung parallel zu einer Richtung, in die sich der positive Elektrodenanschluss und der negative Elektrodenanschluss erstrecken, niedriger ist als ihre thermische Schrumpfung senkrecht zu der Richtung, in die sich der positive Elektrodenanschluss und der negative Elektrodenanschluss erstrecken.

2. Batteriezelle nach Anspruch 1,
wobei die Breiten des positiven Elektrodenanschlusses und des negativen Elektrodenanschlusses von oben betrachtet in der Laminierungsrichtung kleiner sind als die Breiten von Seiten der Batterieanordnung, von der sich der positive Elektrodenanschluss und der negative Elektrodenanschluss erstrecken.

3. Batteriezelle nach Anspruch 1 oder 2,
wobei sich der positive Elektrodenanschluss und der negative Elektrodenanschluss von gegenüberliegenden lateralen Flächen der Batterieanordnung erstrecken.

4. Batteriezelle nach einem der Ansprüche 1 bis 3,
wobei das Paar laterale Flächen der Batterieanordnung, auf denen die Befestigungselemente vorgesehen sind, sich von den lateralen Flächen unterscheiden, von denen sich der positive Elektrodenanschluss und der negative Elektrodenanschluss erstrecken.

5. Batteriezelle nach einem der Ansprüche 1 bis 4,
wobei die Befestigungselemente, die an dem Paar gegenüberliegender lateraler Flächen der Batterieanordnung vorgesehen sind, in Bereichen angeordnet sind, die sich jeweils von einem Paar Seiten der lateralen Flächen zu Mitten der lateralen Flächen erstrecken, und wobei jedes Flächenmaß der Bereiche 25% oder weniger eines Gesamtflächenmaßes der lateralen Fläche beträgt, wobei sich das Paar Seiten der lateralen Flächen in der Laminierungsrichtung erstrecken.

6. Batteriezelle nach einem der Ansprüche 1 bis 5,
wobei ein Volumen eines die Batterieanordnung aufnehmenden Teils des Außengehäuses 10% oder mehr größer ist als ein Volumen der Batterieanordnung.

## Revendications

1. Cellule de batterie comprenant :
un ensemble de batterie qui est contenu à l'intérieur d'un boîtier externe flexible et dans lequel des électrodes positives et des électrodes négatives sont stratifiées en alternance
de sorte à prendre en sandwich un séparateur entre elles ;
une solution électrolytique qui est contenue à l'intérieur dudit boîtier externe ;
une borne d'électrode positive dont une extrémité est connectée électriquement à ladite électrode positive et dont l'autre extrémité s'étend vers l'extérieur dudit boîtier externe ;
une borne d'électrode négative dont une extrémité est connectée électriquement à ladite électrode négative et dont l'autre extrémité s'étend vers l'extérieur dudit boîtier externe ; et
des éléments de fixation qui sont respectivement prévus sur une paire de surfaces latérales opposées dudit ensemble de batterie vu depuis le dessus dans une direction de stratification de ladite électrode positive et de ladite électrode négative, dans laquelle
chacun des éléments de fixation fixe les électrodes et les séparateurs ensemble, lesdits séparateurs, qui se chevauchent de sorte à prendre en sandwich ladite électrode positive entre eux, ont des parties de bord respectives qui sont partiellement assemblées les unes aux autres et ont une forme de sac permettant à ladite électrode positive d'être contenue à l'intérieur, **caractérisée en ce que** lesdits séparateurs sont formés de telle sorte qu'un taux de retrait thermique dans une direction parallèle à une direction dans laquelle s'étendent ladite borne d'électrode positive et ladite borne d'électrode négative, est inférieur à un taux de retrait thermique dans une direction perpendiculaire à la direction dans laquelle s'étendent ladite borne d'électrode positive et ladite borne d'électrode négative.

2. Cellule de batterie selon la revendication 1,
dans laquelle les largeurs de ladite borne d'électrode positive et de ladite borne d'électrode négative sont inférieures aux largeurs des côtés dudit ensemble de batterie à partir desquels s'étendent ladite borne d'électrode positive et ladite borne d'électrode négative, vu depuis le dessus dans la direction de stratification.

3. Cellule de batterie selon la revendication 1 ou 2,
dans laquelle ladite borne d'électrode positive et ladite borne d'électrode négative s'étendent à partir des surfaces latérales opposées dudit ensemble de batterie.

4. Cellule de batterie selon l'une quelconque des revendications 1 à 3,
dans laquelle la paire de surfaces latérales dudit ensemble de batterie sur lesquelles sont prévus lesdits éléments de fixation sont différentes des surfaces latérales à partir desquelles s'étendent ladite borne d'électrode positive et ladite borne d'électrode négative.

5. Cellule de batterie selon l'une quelconque des revendications 1 à 4,
dans laquelle les éléments de fixation prévus sur la paire de surfaces latérales opposées dudit ensemble de batterie sont prévus au niveau de régions s'étendant respectivement à partir d'une paire de côtés des surfaces latérales vers les centres des surfaces latérales, et chaque aire des régions représente 25 % ou moins d'une aire totale de la surface latérale, la paire de côtés des surfaces latérales s'étendant dans la direction de stratification.

6. Cellule de batterie selon l'une quelconque des revendications 1 à 5,
dans laquelle un volume d'un ensemble de batterie contenant une partie dudit boîtier externe qui contient ledit ensemble de batterie est supérieur de 10 % ou plus à un volume dudit ensemble de batterie.
